# FASCICULE DE BREVET EUROPEEN

(11) **EP 0 654 598 B1**
(45) Date de publication et mention de la délivrance du brevet: **26.08.1998**
(21) Numéro de dépôt: 94402669.9
(22) Date de dépôt: 23.11.1994
(51) Int. Cl.: F02K 1/70

(54) **Inverseur de poussée de turboreacteur à double flux**
Schubumkehrvorrichtung für ein Bläsertriebwerk
Thrust reverser for a turbofan engine

(30) Priorité: 24.11.1993 FR 9314036
(43) Date de publication de la demande: 24.05.1995
(73) Titulaire: Hispano-Suiza Aerostructures, 75015 Paris (FR)
(72) Inventeur: de Cambray, Elisabeth, Lucette Francine Christine, F-76600 Le Havre (FR); Vicogne, Laurent Marcel, F-76700 Gonfreville l'Orcher (FR)
(74) Mandataire: Berrou, Paul

(56) Documents cités:
- FR-A- 2 146 109
- US-A- 3 172 256
- US-A- 3 614 037
- US-A- 4 030 291

## Description

La présente invention concerne un inverseur de poussée de turboréacteur à double flux.

Dans ce type de turboréacteur comprenant un canal primaire de circulation des gaz dits de flux chaud constituant une veine principale d'éjection et un canal annulaire, coaxial au canal primaire, où circulent des gaz dits de flux froid, à la sortie par exemple d'une soufflante située à l'entrée du turboréacteur, et constituant une veine secondaire d'éjection, particulièrement lorsque le taux de dilution est élevé, l'inversion de poussée met en oeuvre principalement ou uniquement la dérivation du flux secondaire froid.

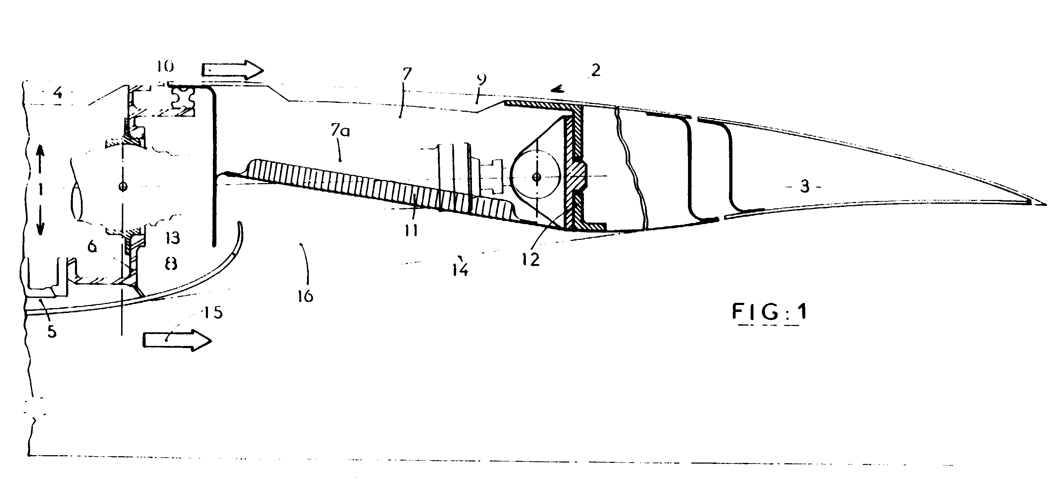

La figure 1 des dessins joints montre un exemple connu de réalisation d'un inverseur de poussée de ce type composé de trois parties principales, une partie fixe 1, située en amont, dans le prolongement de la paroi externe du canal de flux secondaire qui est délimité intérieurement par l'enveloppe de structure centrale du turboréacteur, une partie mobile 2 et une virole arrière fixe 3. Ladite partie fixe amont 1 comprend un panneau externe 4 de nacelle, un panneau interne 5 prolongé par un bord de déviation 8 et limitant extérieurement la veine du flux secondaire et un cadre avant 6 qui assure la jonction desdits panneaux 4 et 5. Ledit cadre 6 sert également de support au dispositif de commande des déplacements de la partie mobile 2 qui est essentiellement composée d'un certain nombre d'éléments déplaçables, ou obstacles communément appelés portes 7, ce nombre pouvant varier en fonction des applications particulières, par exemple deux, trois ou quatre portes 7 formant un ensemble annulaire, éventuellement en coopération avec une partie fixe, selon le mode de montage de l'ensemble de propulsion constitué par le turboréacteur sur l'avion.

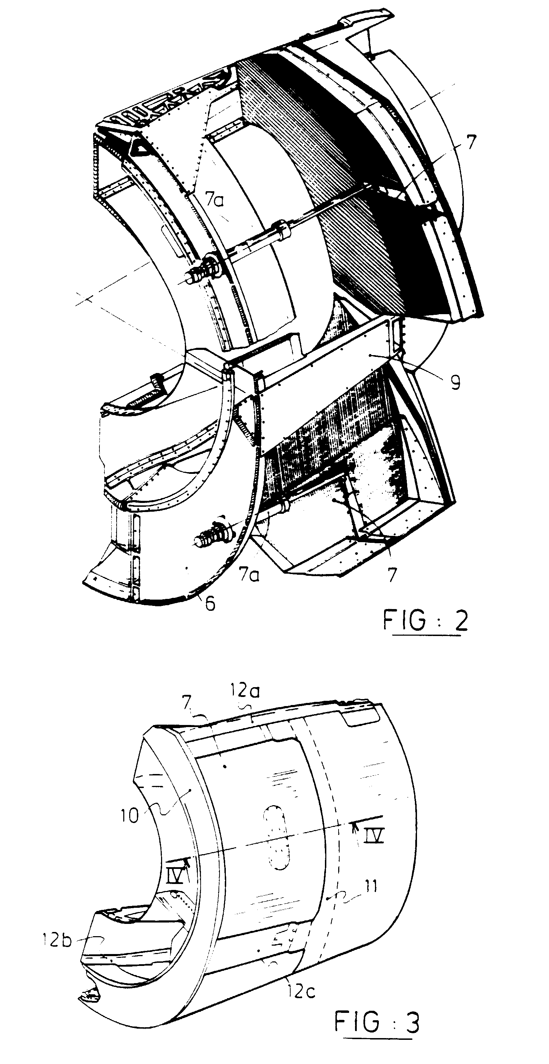

La figure 2 montre, selon une vue schématique partielle en perspective un exemple d'application d'un tel inverseur de poussée à un turboréacteur à double flux, l'inverseur comportant dans ce cas quatre portes 7 dont deux sont visibles sur la figure 2 et sont montrées ouvertes, correspondant à un fonctionnement en inversion de poussée. Chaque porte 7 est associée à un moyen de commande des déplacements tel qu'un vérin 7a.

Des exemples de réalisation de ce type d'inverseur de poussée de turboréacteur à portes basculantes sont décrits notamment par FR-A-2 618 853, FR-A-2 618 852, FR-A-2 621 082,
FR-A-2 627 807, FR-A-2 634 251, FR-A-2 638 207 et
FR-A-2 651 021 dont est titulaire la demanderesse.

Dans ces exemples connus de réalisation, notamment selon FR-A-2.651.021, les pièces structurales de l'inverseur de poussée se composent ainsi du cadre avant tel que 6 sur la figure 1 et de poutres telles que 9 sur la figure 2, disposées suivant une direction longitudinale, parallèle à l'axe de l'inverseur et fixées sur le cadre avant 6. Cette solution connue impose toutefois que tous les efforts mécaniques dus à la masse et à l'inertie de la structure et ceux d'origine aérodynamique sont repris par ledit cadre avant 6. Ce dernier a une masse d'autant plus importante qu'il doit être résistant.

Un des buts de l'invention vise à obtenir une meilleure répartition des efforts dans la structure d'un inverseur de poussée.

Ces buts sont atteints, conformément à l'invention, par un inverseur de poussée du type précité caractérisé en ce que les éléments fixes structuraux se composent outre le cadre avant et les poutres, d'un cadre arrière transversal, les poutres longitudinales reliant les cadres avant et arrière et encadrant avec lesdits cadres avant et arrière les éléments déplaçables de l'inverseur, avant et arrière correspondant respectivement aux bords amont et aval définis par rapport au sens normal de circulation du flux lors du fonctionnement de l'inverseur de poussée en jet direct, et en ce que les moyens de déplacement desdits éléments déplaçables sont fixés sur ledit cadre arrière.

D'autres caractéristiques et avantages de l'invention seront mieux compris à la lecture de la description qui va suivre d'un mode de réalisation de l'invention, en référence aux dessins annexés sur lesquels :
- la figure 1 représente une demi-vue schématique en coupe longitudinale par un plan passant par l'axe de rotation d'un turboréacteur, d'un inverseur de poussée à portes pivotantes, en position fermée, d'un type connu et qui a fait précédemment l'objet d'une description,
- la figure 2 représente une vue partielle en perspective de l'inverseur de poussée représenté à la figure 1, en position déployée,
- la figure 3 montre suivant une vue partielle schématique en perspective les pièces structurales d'un inverseur de poussée selon un mode de réalisation de l'invention ;
- la figure 4 représente, dans une vue analogue à celle de la figure 1, en coupe par un plan suivant la ligne IV-IV de la figure 3, l'inverseur de poussée conforme à l'invention dans une configuration correspondant à un fonctionnement en poussée directe,
- la figure 5 représente, dans une vue analogue à celles des figures 1 et 4, l'inverseur de poussée représenté sur la figure 4, dans une configuration correspondant à un fonctionnement en inversion de poussée
- la figure 6 représente, dans une vue analogue à celle de la figure 4, un inverseur de poussée conforme à l'invention comportant une variante de réalisation du système de commande,
- la figure 7 représente, dans une vue analogue à celle de la figure 5, l'inverseur de poussée représenté sur la figure 6, dans une configuration correspondant à un fonctionnement en inversion de poussée.

Dans un inverseur de poussée d'un turboréacteur à double flux conforme à l'invention et susceptible d'effectuer dans les phases pertinentes de vol d'un avion l'inversion du flux secondaire du turboréacteur, les pièces structurales de l'inverseur se composent, comme schématiquement représenté sur la figure 3 :
- d'un cadre avant 10, disposé transversalement par rapport à l'axe géométrique longitudinal de l'inverseur,
- d'un cadre arrière 11, présentant la même disposition transversale,
- de poutres longitudinales, reliant les cadres avant 10 et arrière 11 et disposées suivant une direction parallèle à l'axe géométrique longitudinal de l'inverseur et notamment, dans l'exemple représenté, une poutre supérieure 12a, une poutre inférieure 12b et une poutre latérale 12c.

Lesdits éléments structuraux 10, 11 et 12 forment l'encadrement des éléments déplaçables telles que les portes de la partie mobile de l'inverseur représentés en 7 sur la figure 3. Avant et arrière correspondent également aux bords amont et aval de l'inverseur de poussée, définis par rapport au sens normal de circulation des gaz dans le turboréacteur et dans l'inverseur de poussée lors du fonctionnement en jet direct.

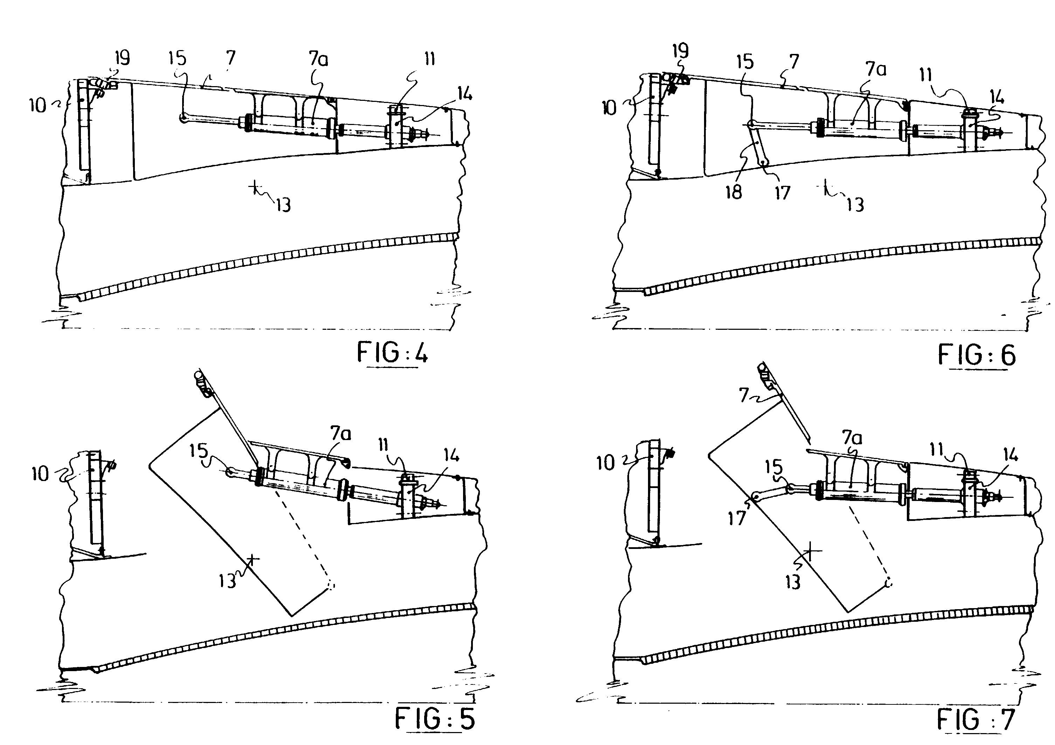

Chaque élément déplaçable ou porte 7 est susceptible de pivoter de manière connue en soi autour de pivots, dont l'un a été symbolisé en 13 sur les figures 4 et 5, disposés latéralement par rapport à la porte 7 et solidaires de la structure fixe de l'inverseur. Le déplacement des portes 7 est obtenu au moyen de vérins 7a qui sont fixés, de manière remarquable et conforme à l'invention, sur le cadre arrière 11 de la structure fixe de l'inverseur.

Comme schématiquement représenté sur les figures 4 et 5, le vérin 7a de manoeuvre de chaque porte 7 est fixé en 14 sur le cadre arrière 11, une articulation symbolisée en 15 assurant la liaison entre le vérin 7a et la porte 7. Pour obtenir la position déployée de l'inverseur de poussée correspondant à l'inversion du jet, comme indiqué par la flèche 16 de la figure 5, la traction du vérin 7a sur l'articulation 15 de la porte 7 fait basculer la porte 7 autour des pivots 13. L'action inverse du vérin 7a permet le retour de la porte 7 à la position de jet direct, telle que représentée sur la figure 4.

Suivant une variante du système de commande des déplacements des éléments déplaçables ou portes 7, schématiquement représentée sur les figures 6 et 7, le point d'application des efforts du vérin 7a sur la porte 7 se fait en un point d'articulation 17 décalé vers la face interne de la porte 7, par l'intermédiaire d'une bielle 18 placée entre ladite articulation 17 et l'articulation 15 sur le vérin 7a.

Dans les deux modes de réalisation de l'invention, les efforts mécaniques développés par les vérins 7a sont dans tous les cas repris par le cadre arrière 11 par l'intermédiaire des fixations 14 du vérin 7a sur ledit cadre arrière 11.

L'invention qui vient d'être décrite en référence aux figures 3 à 7 permet ainsi une répartition judicieuse des efforts entre le cadre avant 10 et le cadre arrière 11 et permet par suite d'obtenir un allègement important du cadre avant 10 compensant l'adjonction du cadre arrière 11 et amenant globalement un gain en masse. Le cadre avant 10 supporte notamment une grande partie des efforts dus à la masse de l'inverseur, une partie seulement des efforts passant par les pivots 13 ainsi que, lors du fonctionnement en jet direct, les efforts supportés par des verrous de blocage des portes 7, schématisées en 19 sur les figures 4 et 6.

Le cadre arrière 11 par contre supporte tous les efforts mécaniques passant par les vérins 7a, une partie des efforts passant par les pivots 13 de porte et une partie des efforts dus à la masse. Cette répartition des efforts entraine également une amélioration de la fiabilité et la sécurité car il existe deux cheminements des efforts. De plus ce type de structure permet certaines redondances en rattachant sur le cadre arrière toute pièce ou dispositif nécessaire au maintien des fonctions dans le cas de défaillance du système fixe sur le cadre avant ou vice-versa.

En outre, les dispositions du système de commande des déplacements des portes 7 permises par la fixation du vérin 7a sur le cadre arrière 11 amènent plusieurs avantages. Les contraintes de flexion dues au carénage du vérin 7a se situant sur le panneau extérieur de la porte 7 sont réduites.

Dans la variante de réalisation représentée sur les figures 6 et 7, l'utilisation d'une bielle articulée 18 fonctionnant avec un effet de genouillère permet une réduction des efforts en début de déploiement de la porte 7 qui reste compatible avec une disposition de montage des portes 7 prépondérant à la fermeture.

Par ailleurs, les moyens de déplacement des éléments déplaçables tels que 7 peuvent être constitués par un dispositif de commande à câbles et les éléments déplaçables constitués par des obstacles pivotants ou basculants peuvent découvrir des grilles de déviation.

## Revendications

1. Inverseur de poussée de turboréacteur à double flux comportant des éléments déplaçables (7) qui, en position fermée, s'intègrent dans la paroi extérieure du canal annulaire du flux secondaire, et en position déployée, constituent des obstacles de déviation du flux secondaire procurant une inversion de poussée, et en outre un cadre avant (10) fixe, structural, disposé transversalement par rapport à l'axe géométrique de l'inverseur, et des poutres longitudinales (12a, 12b, 12c) caractérisé en ce que les éléments fixes structuraux de l'inverseur se composent outre le cadre avant (10) et les poutres, d'un cadre arrière (11) transversal, les poutres longitudinales (12a, 12b, 12c) reliant les cadres avant (10) et arrière (11) et encadrant avec lesdits cadres avant (10) et arrière (11) les éléments déplaçables (7) de l'inverseur, avant et arrière correspondant respectivement aux bords amont et aval définis par rapport au sens normal de circulation du flux lors du fonctionnement de l'inverseur de poussée en jet direct, et en ce que les moyens de déplacement (7a) desdits éléments déplaçables (7) sont fixés sur ledit cadre arrière (11).

2. Inverseur de poussée de turboréacteur selon la revendication 1 dans lequel les moyens de déplacement sont constitués par des vérins et chaque vérin (7a) dont une extrémité (14) est fixée sur le cadre arrière (11) exerce une traction sur une articulation (15) située à son autre extrémité et solidaire de l'élément déplaçable constitué par une porte (7) pour faire passer ladite porte à la position déployée.

3. Inverseur de poussée de turboréacteur selon la revendication 1 dans lequel les moyens de déplacement sont constitués par des vérins et une bielle (18) est articulée à une extrémité (15) de chaque vérin (7a) dont l'autre extrémité (14) est fixée sur le cadre arrière (11) et ladite bielle (18) est articulée à son autre extrémité (17) en un point de l'élément déplaçable constitué par une porte (7) décalé vers la face interne de porte transmet les efforts d'actionnement du vérin (7a) à la porte (7).

4. Inverseur de poussée de turboréacteur selon l'une quelconque des revendications 1 à 3 dans lequel les moyens de déplacement des éléments déplaçables (7) sont constitués par un dispositif de commande à câbles.

5. Inverseur de poussée de turboréacteur selon l'une quelconque des revendications 1 à 4 dans lequel les éléments déplaçables sont constitués par des obstacles pivotants ou basculants découvrant des grilles de déviation.

## Claims

1. A thrust reverser of a bypass turbojet engine comprising movable elements (7) which in the closed position are retracted into the outer wall of the annular bypass flow channel and in the open position form obstacles for deflecting the bypass flow to produce a thrust reversal, and a fixed structural front frame (10) disposed transversely of the geometric axis of the reverser, and longitudinal beams (12a, 12b, 12c), characterised in that the fixed structural elements of the reverser comprise a transverse rear frame (11) in addition to the front frame (10) and the beams, the longitudinal beams (12a, 12b,12c) interconnecting the front frame (10) and the rear frame (11) and co-operating with the frames (10, 11) to frame the movable elements (7) of the reverser, the terms "front" and "rear" corresponding to the upstream edge and downstream edge respectively as defined relatively to the normal flow direction in forward thrust operation of the reverser, and in that the means (7a) for changing the position of the movable elements (7) are secured to the rear frame (11).

2. A thrust reverser according to claim 1 wherein the position-changing means are in the form of rams and each ram (7a), one end (14) of which is secured to the rear frame (11), pulls on an articulation (15) disposed at its other end and rigidly secured to the movable element, in the form of a door (7), to move said door into its open position.

3. A thrust reverser according to claim 1 wherein the position-changing-means are in the form of rams and a rod (18) is pivotally connected to one end (15) of each ram (7a), the other end (14) thereof being secured to the rear frame (11), and the rod (18) is pivotally connected at its other end (17) to the movable element, in the form of a door (7), at a position offset towards the inside surface of the door and transmits the actuating forces of the ram (7a) to the door(7).

4. A trust reverser according to any of claims 1 to 3 wherein the means for changing the position of the movable elements (7) are in the form of a cable drive.

5. A thrust reverser according to any of claims 1 to 4 wherein the movable elements are in the form of pivoting or tilting obstacles which uncover deflecting grids.

## Patentansprüche

1. Schubumkehrvorrichtung für ein Zweikreis-TL-Triebwerk, bestehend aus verschiebbaren Elementen (7), die sich in Schließstellung in die Außenwand des ringförmigen Kanals des Nebenstrahls einfügen und in ausgeklappter Stellung Umlenkhindernisse für den Nebenstrahl bilden, die eine Schubumkehr bewirken, und ferner aus einem feststehenden vorderen strukturellen Rahmen (10), der quer zur Geometrieachse der Schubumkehrvorrichtung angeordnet ist, und Längsträgern (12a, 12b, 12c),
dadurch gekennzeichnet, daß die feststehenden Bauelemente der Schubumkehrvorrichtung neben dem vorderen Rahmen (10) und den Trägern in einem quer verlaufenden hinteren Rahmen (11) bestehen, wobei die Längsträger (12a, 12b, 12c) den vorderen Rahmen (10) und den hinteren Rahmen (11) miteinander verbinden und zusammen mit dem genannten vorderen Rahmen (10) und dem genannten hinteren Rahmen (11) die verschiebbaren Elemente (7) der Schubumkehrvorrichtung einrahmen, wobei vorderer und hinterer der stromaufwärtigen bzw. stromabwärtigen Kante entspricht, die bezogen auf die normale Zirkulationsrichtung des Stroms bei Direktstrahlbetrieb der Schubumkehrvorrichtung definiert sind, und daß die Mittel zur Verschiebung (7a) der genannten verschiebbaren Elemente (7) an dem genannten hinteren Rahmen (11) befestigt sind.

2. Schubumkehrvorrichtung für ein Turbo-Triebwerk nach Anspruch 1, bei der die Verschiebemittel aus Zylindern bestehen und jeder Zylinder (7a), dessen eines Ende (14) am hinteren Rahmen (11) befestigt ist, einen Zug auf ein Gelenk (15) ausübt, das sich an dessen anderem Ende befindet und fest mit einem verschiebbaren Element verbunden ist, das aus einer Klappe (7) besteht, so daß die genannte Klappe in die ausgeklappte Stellung gelangen kann.

3. Schubumkehrvorrichtung für ein Turbo-Triebwerk nach Anspruch 1, bei der die Verschiebemittel aus Zylindern bestehen und eine Stange (18) an einem Ende (15) jedes Zylinders (7a) angelenkt ist, dessen anderes Ende (14) am hinteren Rahmen (11) befestigt ist, und die genannte Stange (18) mit ihrem anderen Ende (17) an einem aus einer Klappe (7) bestehenden und zur Innenseite der Klappe hin verschobenen Punkt des verschiebbaren Elements angelenkt ist und die Bewegungskräfte des Zylinders (7a) auf die Klappe (7) überträgt.

4. Schubumkehrvorrichtung für ein Turbo-Triebwerk nach einem der Ansprüche 1 bis 3, bei der die Verschiebemittel für die verschiebbaren Elemente (7) aus einer Steuervorrichtung mit Kabeln bestehen.

5. Schubumkehrvorrichtung für ein Turbo-Triebwerk nach einem der Ansprüche 1 bis 4, bei der die verschiebbaren Elemente aus schwenkbaren oder kippbaren Hindernissen bestehen, die Umlenkgitter abdecken.
